Europäisches Patentamt

(19) European Patent Office

Office européen des brevets

(11) Publication number: **0 062 383**
**B1**

# (12) EUROPEAN PATENT SPECIFICATION

(45) Date of publication of patent specification: **18.09.85**

(51) Int. Cl.⁴: **A 01 C 1/06**

(21) Application number: **82200400.8**

(22) Date of filing: **31.03.82**

(54) **Process for bringing pregerminated seed in a sowable storable form.**

(30) Priority: **03.04.81 NL 8101680**

(43) Date of publication of application:
**13.10.82 Bulletin 82/41**

(45) Publication of the grant of the patent:
**18.09.85 Bulletin 85/38**

(84) Designated Contracting States:
**AT BE CH DE FR GB IT LI LU NL SE**

(56) References cited:
**DE-A-2 308 229**
**DE-B-1 273 249**
**NL-A-7 612 663**

**"Bawley and Black, Physiology and
Biochemistry of Seeds in Relation to
Germination", Springer Verlag 1978**

(73) Proprietor: **Royal Sluis Koninklijke
Zaaizaadbedrijven Gebroeders Sluis B.V.
Westeinde 161
NL-1601 BM Enkhuizen (NL)**

(72) Inventor: **Sluis, Simon Jacob
Curtiuslaan 14
NL-1851 AM Heiloo (NL)**

(74) Representative: **Kupecz, Arpad et al
Octrooibureau Los en Stigter B.V. Postbox
20052
NL-1000 HB Amsterdam (NL)**

# 0 062 383

## Description

The present invention relates to a process for bringing pregerminated seed in a sowable and storable form.

A pretreating process of seed has already been used in agriculture and horticulture by the farmer who for obtaining a better and quicker germination soaked the seed and admixed the presoaked seed with wet sand prior to sowing it in order to achieve an improved distribution over the land.

Nowadays slowly germinating seed varieties are often pregerminated besides the presoaking, whereby the growth process of the germ root is already started before the seed is sown. Hereby a still quicker emergence of the seed and simultaneously a smaller risk of damage by diseases, pests or weather conditions is achieved.

Recently in the United Kingdom the so-called "fluid drilling" technique has been developed for sowing such pregerminated seed having a visible germ root of about 2 mm. As described in an article by P. J. Salter in Horticulture Industry, March 1976, page 178—179, this pregerminated seed can readily be handled in water despite the fragility of the germ root. After addition of a gel forming component the mixture of pregerminated seed and jelly may be sown by means of a specially for this purpose developed machine through trunk-shaped conduits in regular rows in which however the plants emerge at random distances from each other. The jelly-like mass of pregerminated seed is however not suitable for application in the existing precision-sowing-machines by which individual seeds are brought in the soil with a constant distance from each other at the place where also later the plant is desired. The seeds which may be used in a precision-sowing-machine should have such a form that they may be put one by one in the soil either mechanically or pneumatically.

Since for many plant varieties, such as for example celery and lettuce, a uniform mutual distance is desirable, and it is for the user, who usually owns a standard precision-sowing-machine for sowing quickly germinating seed varieties, very convenient to use said machine precision sowing of pregerminated seed too. Moreover the aforementioned process has also the disadvantage that in a liquid medium the pregerminated seed may only be stored up to 14 days at a temperature of 0—1°C and that for that reason in fact the user himself will have to pregerminate the seed shortly prior to sowing.

The invention aims to provide a process by which the disadvantages mentioned above are eliminated in an effective manner.

Therefore the process according to the invention is characterized in that the pregerminated seed is pelletised to form a moist pellet before the germ root has broken through the seed-coat, whereas the pelletising mixture enclosing the pregerminated seed contains a growth-retarding compound, and in the obtained moist pellets around the seed the correct micro-climate is maintained to enable the seed to be temporarily stored without killing it.

The German DE—A—2 308 229 discloses a process for the introduction of seed into the ground comprising pelletising the same. However the seed to be pelletized are not pregerminated but completely germinated. Furthermore there is no talk about the use of a growth-retarding compound and also not of the maintenance of a correct micro-climate around the seed to enable the seed to be temporarily stored without killing it.

Surprisingly it appeared that the moist pellets produced by the process of the invention are suitably sowable with the conventional precision-sowing-machines for dry seed or dry pellets, whereas also after longer periods of storage of the moist pellets produced by the process of the invention appear to have an excellent emergence percentage after sowing.

Such pregerminated seed in which the germ root is not yet visible, germinates quicker, better and more uniformly than the usual, non-pregerminated seed, for instance:

       celery: 5—7 days quicker than non-pregerminated
       leek: 3—5 days quicker than non-pregerminated
       tomato: 2—3 days quicker than non-pregerminated

The speed of germination is dependent on batch and variety, but also of the conditions at which germination takes place. As the conditions are more infavourable, as when sowing on the outside land, the differences in speed between pregerminated and non-pregerminated seed are larger.

Since the growth process of the new plant has already irreversibly been started in pregerminated seed, the microclimate to be established and maintained inside the obtained pellet is of vital importance for the surviving chances of the germinating seed and for the emergence percentage after sowing. On the one hand the germ may not die off, but on the other the growth must be retarded to such an extent that the germ root will not burst from the pellet already prior to sowing and be damaged in the precision-sowing-machine.

From the following table representing the percentage of visible germination after a certain time it appears that such a micro-climate is absent in dry pills prepared in a manner usual for non-pregerminated seeds.

2

TABLE

| | Celery tall Utah 52—70R improved | Leek kilima |
|---|---|---|
| germinating method | 20°C, light, filter paper | 15°C, light filter paper |
| non-pregerminated seed: | 91% in 9 days | 95% in 6 days |
| pregerminated seed: | 98% in 3 days | 97% in 4 days |
| pregerminated seed+ normally pelletised | 95% in 3 days | 97% in 4 days |

From this table it appears clearly that the conventional coating has no retarding effect on the germination of the seed having the disadvantage that the pelletised seeds obtained in this way already sprout and break the pellet, before sowing could have taken place.

According to the invention the required micro-climate inside the moist pellet is obtained by addition of compounds which have a growth retarding action. Such compounds may be compounds having an osmotic action, e.g. water soluble sugars and their derivatives, salts and glycols and their polymers. Preferably a 0.001—1 M solution of sodium chloride is used. A suitable growth retarding compound may be mentioned absicine acid, in a concentration of $10^{-6}$ to $10^{-4}$M.

The micro-climate inside the moist pellet thus obtained may be maintained according to the invention by storing during prolonged period of time the pellets at a temperature of 0—10°C and/or under reduced pressure until the moment of sowing. In this way the seeds in pelletised form are storable for 2—5 weeks, which is long enough to distribute the pellets from a central point to the users.

For an optimal sowability according to the invention the moist pellets preferably are finished with a smooth mineral compound, preferably with talc.

The pregerminated seed pelletised to moist pellets according to the process of the invention gives also for slowly germinating seed varieties a quick emergence, a high emergence percentage and a uniform distribution of the emerging vegetation over the land to be cultivated.

The invention is further illustrated by the following non-restrictive examples.

Example I

Celery tall Utah 52—70R improved

An amount of 3000 g of pregerminated seed, corresponding with about 1500 g of dry seed, was coated in a conventional pelletising kettle (diameter: 1000 mm, rotation speed: 22 rotations per minute) with a coating mixture according to the Netherlands Patent Specification 74,911. In order to raise the osmotic value the mixture was sprayed with a 0.2M aqueous solution of sodium chloride during the process. Per 3000 g pregerminated seed 18—43 kg of the coating mixture and about 2.5 l of the salt solution was used for pellets of 2—2.5 mm depending on the fineness of the seed.

After the pellets had attained the desired size, they were coated with an amount of talc equal to 1.6 times the weight of the pregerminated seed. At the end of the pelletising process the pellets were sieved on 2—2.5 mm and further stored at 5°C.

| | |
|---|---|
| weight of 1000 pellets | 11—13 g |
| weight gain | 10—18 × |
| duration of pelletising | 4 h |

The pelletised pregerminated seed thus obtained was sown by means of a precision-sowing-machine on press pots in the green house at 18°C and after 10 days an emergence percentage of 97% was observed. When the pelletised pregerminated seed had been stored before sowing during 20 days at 5°C under vacuum, the emergence percentage was 96% 9 days after sowing.

Example II

Leek alaska

An amount of 5000 g of pregerminated seed, corresponding to about 3000 g of dry seed, was coated in a conventional pelletising kettle (diameter: 1000 mm, rotation speed: 22 rotations per minute) with a coating mixture according to the NL—A—72,576.

In order to increase the osmotic value a 0.3 M aqueous solution of sodium chloride was sprayed. Per 5000 g pregerminated seed 32—38 kg of the coating mixture and 1—1.5 l of salt solution was used for pellets of 3—3.5 mm depending on the fineness of the seed.

For finishing the pellets 5000 g of mineral compound was used. At the end of the pelletising process the pellets were sieved on 3—3.5 mm, directly transferred to a sealed tin under reduced pressure and stored at 5°C.

| | |
|---|---|
| weight of 1000 pellets | 40—45 g |
| weight gain | 8.5—10 × |
| duration of pelletising | 2.5—3 h |
| emergence percentage at sowing in the green house on press pots | 98% after 7 days |
| emergence percentage at sowing after intermediate storage during 17 days at 5°C | 96% after 7 days |

Example III

The Examples I and II were repeated applying the coating mixture according to the Netherlands Patent Specification 139,091.

Instead of the salt solution 0.05—1 M solutions of sugar or 1—20% by weight solutions of glycol were used for increasing the osmotic value. The pellets obtained showed properties comparable with those of the preceding examples.

Example IV

The Examples I and II were repeated applying the coating material according to the NL—A—139,091. Instead of the salt solution for increasing the osmotic value in this case $10^{-5}$M absicic acid was used as compound having growth retarding action. The pellets obtained showed properties comparable with those of the preceding examples.

### Claims

1. A process for bringing pregerminated seed in a sowable and storable form, characterized in that the pregerminated seed is pelletised to form a moist pellet before the germ root has broken through the seed-coat, whereas the pelletising mixture enclosing the pregerminated seed contains a growth-retarding compound, and in the obtained moist pellets around the seed the correct micro-climate is maintained to enable the seed to be temporarily stored without killing it.

2. The process according to claim 1, characterized in that as growth-retarding compound a water soluble compound having osmotic action is used.

3. The process according to claim 2, characterized in that a 0.001 to 1 M solution of sodium chloride is used.

4. The process according to claim 1, characterized in that as growth-retarding compound absicine acid is used in a concentration of $10^{-6}$ to $10^{-4}$M.

5. The process according to one of the claims 1—4, characterized in that the correct micro-climate is maintained by storing the pellets at a temperature of 0—10°C and/or under reduced pressure.

6. The process according to one of the claims 1—5, characterized in that the moist pellets are coated with a smooth mineral compound.

7. The process according to claim 6, characterized in that as mineral compound talc is used.

### Revendications

1. Procédé pour donner à une graine prégerminée une forme lui permettant d'être semée et stockée, caractérisé en ce que la graine prégerminée est empastillée pour former une pastille humide avant que la racine du germe ait traversé l'enveloppe de la graine, alors que le mélange d'empastillage renfermant la graine prégerminée contient un composé retardateur de croissance et, dans les pastilles humides obtenues entourant la graine, le micro-climat correct est maintenu pour permettre à la graine d'être stockée momentanément sans être tuée.

2. Procédé selon la revendication 1, caractérisé en ce que l'on utilise, comme composé retardateur de croissance, un composé hydrosoluble à action osmotique.

3. Procédé selon la revendication 2, caractérisé en ce qu'une solution de 0,001 à 1M de chlorure de sodium est utilisée.

4. Procédé selon la revendication 1, caractérisé en ce que l'on utilise, comme composé retardateur de croissance, de l'acide du type abscisine à une concentration de $10^{-6}$ à $0^{-4}$M.

5. Procédé selon l'une des revendications 1—4, caractérisé en ce que le micro-climat correct est maintenu par stockage des pastilles à une température de 0—10°C et/ou sous pression réduite.

4

6. Procédé selon l'une des revendications 1—5, caractérisé en ce que les pastilles humides sont revêtues d'un composé minéral doux.

7. Procédé selon la revendication 6, caractérisé en ce que l'on utilise du talc comme composé minéral.

**Patentansprüche**

1. Verfahren zum Einbringen eines vorgekeimten Saatguts in eine aussäbare und lagerungsfähige Form, dadurch gekennzeichnet, daß das vorgekeimte Saatgut unter Bildung von feuchten Pellets pelletisiert wird, bevor die Keimwurzel die Saathülle durchbrochen hat, wobei die Pelletisierungsmischung, welche das vorgekeimte Saatgut einschließt, eine wachstumshemmende Verbindung enthält, und in den erhaltenen feuchten Pellets um das Saatgut herum das erforderliche Mikroklima aufrechterhalten wird, um das Saatgut temporär ohne Abtötung zu Lagern.

2. Verfahren nach Anspruch 1, dadurch gekennzeichnet, daß als wachstumshemmende Verbindung eine wasserlösliche Verbindung mit einer osmotischen Wirkung verwendet wird.

3. Verfahren nach Anspruch 2, dadurch gekennzeichnet, daß eine 0,001 bis 1 m Lösung von Natriumchlorid verwendet wird.

4. Verfahren nach Anspruch 1, dadurch gekennzeichnet, daß als wachstumshemmende Verbindung Absicinsäure in einer Konzentration von $10^{-6}$ bis $10^{-4}$ m verwendet wird.

5. Verfahren nach einem der Ansprüche 1 bis 4, dadurch gekennzeichnet, daß das erforderliche Mikroklima durch Lagerung der Pellets bei einer Temperatur von 0 bis 10°C und/oder unter vermindertem Druck aufrechterhalten wird.

6. Verfahren nach einem der Ansprüche 1 bis 5, dadurch gekennzeichnet, daß die feuchten Pellets mit einer glatten Mineralverbindung beschichtet werden.

7. Verfahren nach Anspruch 6, dadurch gekennzeichnet, daß als Mineralverbindung Talk verwendet wird.